# EUROPEAN PATENT APPLICATION

(11) **EP 4 787 125 A1**
(43) Date of publication of application: **05.08.2026**
(21) Application number: 24900880.6
(22) Date of filing: 06.11.2024
(51) Int. Cl.: G06F 3/01, G10L 15/22, G06F 3/16

(54) **ELECTRONIC DEVICE CAPABLE OF RECOGNIZING USER, AND CONTROL METHOD THEREFOR**

(30) Priority: 05.12.2023 KR 20230174778
(71) Applicant: Samsung Electronics Co., Ltd., Suwon-si, Gyeonggi-do 16677 (KR)
(72) Inventor: JANG, Jeongrok, Suwon-si Gyeonggi-do 16677 (KR); LEE, Jaehwang, Suwon-si Gyeonggi-do 16677 (KR)
(74) Representative: Appleyard Lees IP LLP
(86) International application number: PCT/KR2024/017415
(87) International publication number: WO 2025/121693

(57) **Abstract**

An electronic apparatus is disclosed. The electronic apparatus comprises an interface, a memory and one or more processors, wherein the one or more processors can: provide one or more candidate words on the basis of feature information of a gesture when the gesture for account registration is identified on the basis of sensing data acquired through the interface; store, in the memory, account information including the selected candidate word and the feature information of the gesture when one or more is selected from among the one or more one candidate words; and perform a control operation on the basis of the account information corresponding to the voice and gesture of the user from among a plurality of pieces of account information stored in the memory when the voice and gesture of the user are identified.

## Description

### [Technical Field]

The disclosure relates to an electronic apparatus and a control method therefor, and more particularly to an electronic apparatus capable of recognizing a user through a sensed gesture of the user and a control method therefor.

### [Background Art]

Recently, instances of various electronic apparatuses such as mobile phones, tablets, and TVs recognizing a gesture or a voice of a user and performing an operation corresponding to the gesture or the voice are increasing.

In order to use an electronic apparatus in a gesture recognition mode or a voice recognition mode, a specific trigger gesture or trigger voice has to be input.

For example, the electronic apparatus may initiate the voice recognition mode when a voice of "Hi XXX" is input, recognize a voice of a user that is input thereafter, and perform an operation corresponding thereto. Specifically, if the user uttered a voice of "please let me know what the weather is today", the electronic apparatus may provide a response corresponding to the content of the utterance. If a voice of "Hi XXX" is not input, the electronic apparatus may not respond in any way.

However, if a plurality of users use one electronic apparatus, there is a problem of the electronic apparatus identifying a user with a right for control with only the trigger gesture or the trigger voice being difficult.

Accordingly, there is a growing need for technology that responds by identifying if the recognized gesture or voice is a gesture or voice input by which user among a plurality of users.

### [Disclosure]

### [Technical Solution]

According to one aspect of the disclosure, an electronic apparatus includes an interface, memory, and at least one processor, and the at least one processor is configured to, based on a gesture for account registration being identified based on sensing data obtained through the interface, provide at least one candidate word based on feature information of the gesture, based on at least one among the at least one candidate word being selected, store account information that includes the selected candidate word and feature information of the gesture in the memory, and based on a user voice and a gesture being identified, perform a control operation based on account information corresponding to the user voice and a gesture among a plurality of account information stored in the memory.

According to one aspect of the disclosure, a control method of an electronic apparatus includes, based on a gesture for account registration being identified, providing at least one candidate word based on feature information of the gesture, based on at least one among the at least one candidate word being selected, storing account information that includes the selected candidate word and feature information of the gesture, and based on a user voice and a gesture being identified, performing an operation based on account information corresponding to the user voice and a gesture among a plurality of stored account information.

According to one aspect of the disclosure, in terms of a non-transitory computer-readable recording medium including a program for executing a control method of an electronic apparatus, the method includes, based on a gesture for account registration being identified, providing at least one candidate word based on feature information of the gesture, based on at least one among the at least one candidate word being selected, storing account information that includes the selected candidate word and feature information of the gesture, and based on a user voice and a gesture being identified, performing an operation based on account information corresponding to the user voice and a gesture among a plurality of stored account information.

### [Description of Drawings]

FIG. 1 is a diagram illustrating an operation of an electronic apparatus according to one or more embodiments of the disclosure;
FIG. 2 is a block diagram illustrating a configuration of an electronic apparatus according to one or more embodiments of the disclosure;
FIG. 3 is a diagram illustrating a word providing method of an electronic apparatus according to one or more embodiments of the disclosure;
FIG. 4 is a diagram illustrating a live view providing method of an electronic apparatus according to one or more embodiments of the disclosure;
FIG. 5 is a diagram illustrating an operation of an electronic apparatus according to one or more embodiments of the disclosure;
FIG. 6 is a diagram illustrating an operation of an electronic apparatus according to one or more embodiments of the disclosure;
FIG. 7 is a diagram illustrating a gesture recognition mode operating method of an electronic apparatus according to one or more embodiments of the disclosure;
FIG. 8 is a diagram illustrating a user account switching operation method of an electronic apparatus according to one or more embodiments of the disclosure;
FIG. 9 is a diagram illustrating a candidate word providing method of an electronic apparatus according to one or more embodiments of the disclosure;
FIG. 10 is a block diagram illustrating a detailed configuration of an electronic apparatus according to one or more embodiments of the disclosure;
FIG. 11 and FIG. 12 are flowcharts illustrating an account information storing method of an electronic apparatus according to one or more embodiments of the disclosure; and
FIG. 13 is a flowchart illustrating a user account identifying method of an electronic apparatus according to one or more embodiments of the disclosure.

### [Mode for Invention]

Terms used in the disclosure will be briefly described, and the disclosure will be described in detail. In the disclosure, the expression "at least one among a, b, or c" may refer to "a", "b", "c", "a and b", "a and c", "b and c", "all of a, b, and c", or modifications thereof.

Terms used in the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the relevant description. Accordingly, the terms used herein are not to be understood simply as its designation but based on the meaning of the term and the overall context of the disclosure.

A singular expression includes a plural expression, unless otherwise specified. The terms used herein, including technical or scientific terms, may have the same meaning as the terms generally understood by those of ordinary skill in the related field of art. In addition, terms that include ordinal numbers such as 'first' or 'second' used in the disclosure may be used to describe various elements, but the elements are not to be limited by the terms. The terms are merely used for the purpose of distinguishing one element from another element.

Throughout the disclosure, when a certain portion is described as "including" a certain element, the above may mean that another element may be further included rather than excluding the another element, unless otherwise specifically described. In addition, terms such as "portion" or "module" described in the disclosure may mean a unit that processes at least one function or operation, and the above may be implemented with a hardware or software, or implemented with a combination of hardware and software.

The disclosure relates to an electronic apparatus that effectively performs an operation corresponding to a gesture or a voice of a user by more accurately recognizing the user with a multi modal method and a method thereof. The electronic apparatus according to an embodiment of the disclosure may obtain the gesture and the voice of the user and identify whether the gesture and the voice of the user corresponds to which user account among a plurality of user accounts stored in the electronic apparatus.

In the disclosure, "account information" may be identification information registered for each user. For example, account information may include a word corresponding to a gesture, a word corresponding to an object, a word corresponding to a distance, a word corresponding to a section, and a wake up word. Here, gesture may be various motions made by a user with his/her body or holding other articles. An object may be an article in possession of the user or designated by a user. For example, if a user holds up and shakes a cup or a mobile phone, words corresponding to cup, mobile phone, and the like may be registered in the account information. A distance may be a distance between a user and an electronic apparatus, and a section may be information indicating which direction the user is positioned based on a center of the electronic apparatus.

In the disclosure, "wake up word" may be a word registered in a user account information, and may be a word that guides the electronic apparatus to start an operation for identifying a user account, a word that commands the electronic apparatus to initiate a specific mode, or the like. Through the input of the "wake up word", the electronic apparatus may start an operation of comparing feature information of a gesture of a user input in the electronic apparatus and a gesture that is already stored in the electronic apparatus. In addition, "wake up word" may be substituted by various words that can start an operation of the electronic apparatus such as "trigger word", "activation word", "start word", and the like.

"Account information" of a plurality of users may be stored in the electronic apparatus and used to identify each user. In addition, "account information" may be substituted with other words that indicate information with which each of the plurality of users can be distinguished such as "user identification information" and "user personal information".

In the disclosure, "feature information of a gesture" may be information indicating a feature of a sensed gesture being differentiated compared to another gesture. In the feature information of a gesture, information about a word corresponding to a gesture, a word corresponding to a section in which a gesture is sensed, a word corresponding to a distance at which a gesture is sensed, and the like may be included.

In the disclosure, "feature information of an object" may be information indicating a feature of a sensed object being differentiated compared to another object. The feature information of an object may be included with information about a word corresponding to an object, a word corresponding to a section in which an object is sensed, a word corresponding to a distance at which an object is sensed, and the like.

In the disclosure, the "feature map of a gesture" and the "feature map of an object" may include data of a 2-dimensional arrangement obtained through a learned neural network model. Specifically, "feature map" may be data that is obtainable by inputting a captured image in the learned neural network model, and is distinguishable from the above-described "feature information of a gesture" and "feature information a gesture".

Embodiments of the disclosure will be described in detail with reference to the accompanying drawings below to aid in the understanding of those of ordinary skill in the art to which the disclosure pertains. However, the disclosure may be implemented in various different forms and it should be noted that the disclosure is not limited to the embodiments described herein. Further, in the drawings, portions not relevant to the description may be omitted to clearly describe the disclosure, and like reference numerals may be used to indicate like elements throughout the whole of the disclosure.

The disclosure will be described below with reference to the accompanied drawings.

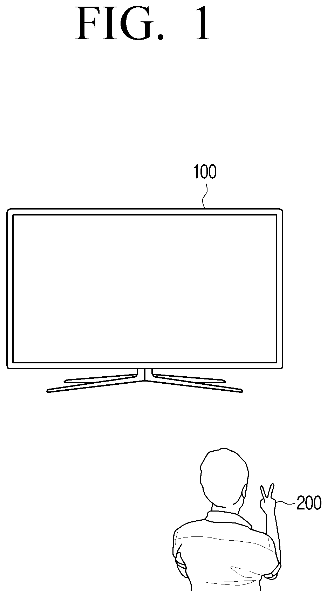

FIG. 1 is a diagram illustrating an operation of an electronic apparatus according to one or more embodiments of the disclosure.

In an embodiment, an electronic apparatus 100 may identify a gesture 200 of a user, and provide the user with a candidate word by recognizing the identified gesture. In FIG. 1, a user making a gesture using his/her hand has been shown, but the user may make a gesture using a random object.

The electronic apparatus 100 may provide a plurality of candidate words based on the gesture 200 of the user, and the user may select one candidate word to store as a wake up word in a user account information corresponding to the relevant user. The wake up word may be information for the electronic apparatus to perform an operation for identifying a user account or an operation for switching to a specific mode as described above. The candidate word may be a word that has a possibility of being used as the wake up word.

For example, if the user makes a gesture 200 by spreading two of his/her fingers making a form similar with the letter "V", the electronic apparatus 100 may sense said gesture 200, and input the sensed data in the learned neural network model. The electronic apparatus 100 may provide, based on an output of a neural network model, various candidate words such as "Victory", "V", "Two", and "Second".

The user may select at least one among the candidate words as the wake up word. For example, if the user selects the received candidate word "V" as the wake up word, the electronic apparatus 100 may store the relevant candidate word in the user account information. In this state, the electronic apparatus 100 may be able to identify, if the word "V" is recognized through a voice of the user, an account information of a relevant user among a plurality of account information stored in the electronic apparatus 100.

The electronic apparatus 100 may not only store the wake up word in the user account information, but also store feature information of the gesture 200 in the user account information. Because even the feature information of the gesture 200 is stored in the user account information, the electronic apparatus 100 may compare the feature information of the gesture 200 of the user with gesture feature information of a plurality of pre-stored account information, and accurately identify the account information of the relevant user.

The feature information of the gesture 200 may include information about a word corresponding to the gesture 200 of the user recognized by the electronic apparatus 100, a word corresponding to a distance between the sensed gesture 200 of the user and the electronic apparatus 100, a word corresponding to a section in which the gesture 200 of the user is sensed by the electronic apparatus 100, and the like, and information about time during which the user maintained the gesture 200, and the like.

Specifically, if there are two users that registered the wake up word "V", the electronic apparatus 100 may identify two user account information that registered the relevant wake up word if the wake up word "V" is determined as uttered.

Alternatively, even if the gesture 200 "V" is registered in both the two user account information, the distance at which and the sensed section in which the gesture 200 "V" has been sensed may be different from each other. Accordingly, the electronic apparatus 100 may ultimately identify one user account information among the two user account information by comparing feature information of the gesture 200. In other words, assuming that user A registered the V gesture standing toward the left based on the electronic apparatus 100 from a position that is 2 meters from the electronic apparatus 100, and user B registered the V gesture standing in front of the electronic apparatus 100 from a position that is 3 meters from the electronic apparatus 100, the electronic apparatus 100 may identify that user A is logged-in if a user uttered "V" while making the "V" gesture from the left side of the electronic apparatus 100 from a position that is 2 meters therefrom.

Accordingly, the electronic apparatus 100 according to the disclosure may be able to more accurately recognize, by recognizing a user with a 'multi modal' method that senses both voice and gesture corresponding to the wake up word, a user compared to a 'signal modal' method of prior art.

In an embodiment, the electronic apparatus 100 may be apparatuses of various types capable of sensing a voice and gesture of a user, a distance with a user, and the like. For example, the electronic apparatus 100 may be electronic apparatuses of various types capable of sensing a gesture of a user through a sensor of a TV, a smartphone, a tablet PC, a laptop PC, a desktop PC, a set top box, a cleaning robot, a speaker, and the like, but is not limited thereto. The electronic apparatus 100 may be directly embedded with a camera or a microphone for receiving input of a gesture or a voice of the user, but is not necessarily limited thereto, and may be connected with an external apparatus embedded with a camera or a microphone, or both thereof, and receive input of a captured image that captured the user or a voice signal of the user from the apparatuses described, or receive input of a recognition result for a gesture or a recognition result for a voice signal.

In addition, the gesture 200 of the user may include not only a hand motion such as "V", but also all various motions such as, for example, and without limitation, a hand raising motion, a forward hand reaching motion, a hand shaking motion, making a heart shape with fingers motion, making a cross (or X) or fist clenching motion, or the like.

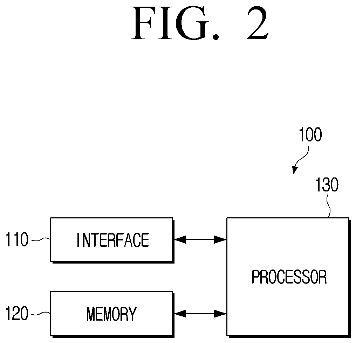

FIG. 2 is a block diagram illustrating a configuration of an electronic apparatus according to one or more embodiments of the disclosure.

Referring to FIG. 2, the electronic apparatus 100 may include an interface 110, memory 120, and a processor 130.

The interface 110 may include a communication interface, an operation interface, an input and output interface, and the like. For example, the communication interface may be a configuration for performing communication with at least one external apparatus. The communication interface may include at least one wireless communication module, at least one wired communication module, and the like. Each communication module may be implemented in at least one hardware chip form. The wireless communication module may include at least one module among a Wi-Fi module, a Bluetooth module, an infrared communication module, or other communication modules. In addition thereto, the communication interface may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like. The wired communication module may include at least one among, for example, a local area network (LAN) module, an Ethernet module, a pair cable, a coaxial cable, an optical fiber cable, or an ultra wide-band (UWB) module. The communication interface may be implemented in various forms as described above, and by performing communication with an external apparatus, may receive various data from the external apparatus.

The operation interface may be a configuration for receiving input of a user operation. The operation interface may include various buttons, a touch screen, and the like provided at the main body of the electronic apparatus 100.

The input and output interface may be a configuration for inputting and outputting various external signals. The input and output interface may be connected with various external memories or external sources (e.g., web server, user terminal device, etc.), and receive input of various data. The input and output interface may be implemented as at least one or more interfaces among a High Definition Multimedia Interface (HDMI), a Mobile High-Definition Link (MHL), a universal serial bus (USB), a USB C-type, a display port (DP), a Thunderbolt, a video graphics array (VGA) port, an RGB port, a Dsubminiature (D-SUB), and a digital visual interface (DVI). At least a portion among the input and output interface may be connected with the communication interface. For example, the input and output interface may transmit information received from an external apparatus to the communication interface or transmit information received through the communication interface to the external apparatus.

The interface 110 may be connected with a sensor or an external apparatus that is embedded with a sensor. The sensor may be a configuration for sensing a gesture of a user, an object of a user, a distance between a user and an electronic apparatus, and the like. The sensor may include, for example, a camera, a LiDAR sensor, a ToF sensor, and the like.

In an example, if a camera is connected with a USB port among the interfaces 110, the electronic apparatus 100 may obtain an image which captured the user through the camera. The processor 130 may sense a gesture of the user or an object of the user through the obtained image.

Specifically, the camera may capture a video incident from a time-point at which the user starts capturing using an image sensor, and store the captured photograph image data. The electronic apparatus 100 may obtain an image corresponding to a user through the captured photograph image data, and sense the gesture of the user or the object of the user based on the image corresponding to the user.

In another example, if the interface 110 is connected with the LiDAR sensor, or connected with an external apparatus that includes the LiDAR sensor, the LiDAR sensor may emit a laser beam in several directions, and if the emitted laser beam is reflected from the surrounding objects, collect the same. The LiDAR sensor may obtain a round-trip time of the laser beam. The processor 130 may perform, based on information about the round-trip time obtained from the LiDAR sensor, sensing of positions, distances, and heights of the surrounding objects.

In FIG. 2, although the sensor and the like being connected through the interface 110 has been shown and described, the electronic apparatus 100 may be embedded with the camera, the LiDAR sensor, or the like according to an embodiment.

If the electronic apparatus 100 includes both the camera and the LiDAR sensor, the processor 130 may obtain visual information through an image captured through the camera, and obtain spatial information about the positions, distances, and the like of the objects based on sensing values of the LiDAR sensor. The processor 130 may obtain various and accurate sensing data by using a plurality of sensors.

The above-described camera, LiDAR sensor, and the like are merely one example of the sensor, and the electronic apparatus 100 may be connected with sensors of various types that sense a gesture of the user, an object of the user, a distance between the user and the electronic apparatus, and the like, or may be embedded with the same.

The memory 120 may store various programs or data, instructions, and the like used in the electronic apparatus 100. The memory 120 may also store a plurality of user account information. In addition thereto, the memory 120 may store various data and learning models according to various embodiments of the disclosure such as sensing data obtained through the sensor and a learned neural network model.

The memory 120 according to an embodiment of the disclosure may be implemented as an internal memory such as a ROM (e.g., electrically erasable programmable read-only memory (EEPROM)), a RAM, and the like included in one or more processors 130, or implemented as memory separate from the one or more processors 130. In this case, the memory 120 may be implemented in a form of a memory embedded in the electronic apparatus 100 according to a data storage use, or implemented in a form of a memory attachable to or detachable from the electronic apparatus 100. For example, data for driving of the electronic apparatus 100 may be stored in the memory embedded in the electronic apparatus 100, and data for an expansion function of the electronic apparatus 100 may be stored in the memory attachable to or detachable from the electronic apparatus 100.

Meanwhile, the memory embedded in the electronic apparatus 100 may be implemented as at least one of a volatile memory (e.g., dynamic RAM (DRAM), static RAM (SRAM), or synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), hard disk drive (HDD) or solid state drive (SSD)), and the memory attachable to or detachable from the electronic apparatus 100 may be implemented in a form such as, for example, and without limitation, a memory card (e.g., compact flash (CF), secure digital (SD), micro secure digital (micro-SD), mini secure digital (mini-SD), extreme digital (xD), multi-media card (MMC), etc.), an external memory (e.g., USB memory) connectable to the USB port, or the like.

The processor 130 may control the overall operation of the electronic apparatus 100. Specifically, the processor 130 may be connected with the interface 110 and the memory 120, and by executing one or more instructions or programs stored in the memory 120, control the operations of the electronic apparatus 100 overall.

The processor 130 may obtain sensing data for a gesture of the user through a sensor connected through the interface 110 or an embedded sensor. As described above, the sensor may correspond to the camera and the LiDAR sensor, and the processor 130 may obtain an image which captured the gesture of the user through the sensor or obtain 3D cloud points of the gesture of the user.

In addition, the processor 130 may obtain, if the sensor is the ToF sensor, sensing data of various types through sensors of various types capable of obtaining distance information about the gesture of the user, and the like.

In addition, the processor 130 may identify a gesture of the user based on the obtained sensing data. Here, "identifying a gesture" of the user may mean obtaining feature information of a gesture of the user based on sensing data.

The identifying a gesture may be implemented with various methods. For example, the processor 130 may analyze a pixel value of each pixel, identify a user, and identify a gesture by tracking the identified user in a plurality of image frames captured consecutively by the camera.

Specifically, the processor 130 may divide all pixels included in each of a plurality of consecutive image frames into a plurality of blocks units consisting of n*m number of pixels. The processor 130 may detect a representative value that represents a feature of pixels in each block. The representative value may be an average pixel value of pixels in each block, but is not limited thereto, and may be a maximum pixel value or a minimum pixel value, or a Root Means Square (RMS) value.

The processor 130 may connect blocks that have a representative value of a similar range among the plurality of blocks, that are disposed at positions consecutive to one another, and that form a closed-loop, and identify the closed-loop as an edge of an object included in the captured image. The processor 130 may identify a size of a relevant object based on a number of blocks included in the edge. In addition, the processor 130 may identify a form of a relevant object based on a form of the edge, and accordingly, identify a type of the relevant object. In addition, the processor 130 may determine what gesture is made in which section by the user based on a position of the block corresponding to the edge.

If the user raises his/her hand and makes a gesture, the processor 130 may detect an edge connecting the plurality of blocks disposed similarly with a shape of a human hand. The processor 130 may track, from a plurality of consecutive image frames, a change in position of the blocks relevant to the same edge, and identify whether the user is making a gesture of raising his/her hand and forming a V-shaped form.

Alternatively, the processor 130 may identify the gesture of the user using the learned neural network model.

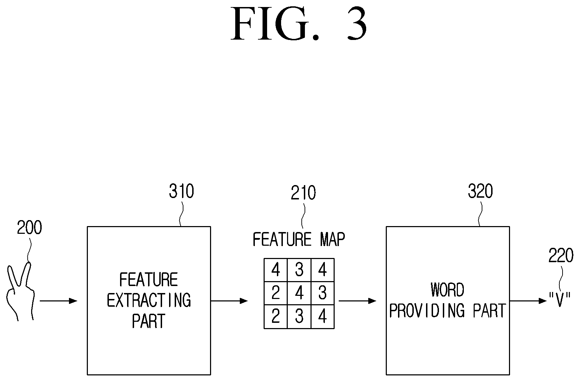

For example, if the user motioned the gesture "V" from a right top section based on a position that is 2 meters from the electronic apparatus and the center point of the electronic apparatus, the processor 130 may obtain information that the gesture "V" has been detected from a distance that is 2 meters from the electronic apparatus and from a right top section of the electronic apparatus based on sensing data. Then, the processor 130 may input an image which captured the gesture "V" in the learned neural network model stored in the memory 120 and output a result value indicating that the gesture in the captured image corresponds to the word "V". Ultimately, the processor 130 may obtain, based on sensing data, feature information of the gesture that the gesture of the user corresponds to the word "V", that the distance sensed from the electronic apparatus is "2 m", and that the section sensed by the electronic apparatus is "right top". The word obtaining method corresponding to the gesture via the above-described learned neural network model will be described in detail in the description part of FIG. 3 below.

In addition, the processor 130 may provide at least one candidate word based on the feature information of the gesture. In one embodiment, the processor 130 may select and provide each of a word corresponding to the gesture, a word corresponding to a distance at which the gesture is sensed, and a word corresponding to a section in which the gesture is sensed as candidate words. For example, the processor 130 may provide various candidate words such as "V" or "victory", "two", "second", "2 m", or "right top" to the user.

In another embodiment, the processor 130 may provide a candidate word by combining the feature information of the gesture. For example, the processor 130 may combine the word corresponding to the gesture and the word corresponding to the distance from which the gesture is sensed and provide a candidate word of "V 2 m" to the user, and combine the word corresponding to the distance from which the gesture is sensed and the word corresponding to the section and provide a candidate word of "2 m right top".

In addition, the processor 130 may provide only one candidate word to the user, and contrary to the above, provide several candidate words at once. For example, the processor 130 may provide a plurality of candidate words such as "V", "2 m", "right top", "V 2 m", and "2 m right top" to the user.

The processor 130 may provide candidate words to the user through various methods. In an embodiment, if the electronic apparatus 100 is an apparatus such as a TV, a smart monitor, a laptop PC, a mobile phone, a tablet PC, or a kiosk that include a display, the processor 130 may control the display to display a UI screen for providing candidate words. In still another embodiment, the electronic apparatus 100 may be connected with an external display apparatus through the interface 110. For example, the electronic apparatus 100 may be a desktop PC, a set top box, a content integrated source, a server apparatus, and the like. In this case, the processor 130 may provide data on the UI screen that provides the candidate words and a control signal for displaying the same to the external display apparatus. The external display apparatus may display, based on the control signal and data, a UI screen capable of providing the candidate words.

In still another embodiment, if the electronic apparatus 100 includes a speaker capable of outputting sound, or is connected with the external electronic apparatus that includes the speaker and is capable of providing a control signal to output sound to the external electronic apparatus, candidate words may be provided to the user by outputting the candidate words in a voice signal.

The above-described embodiments for providing the candidate words are merely one example, and at least one candidate word may be provided to the user through the display or various methods with which the voice signal can be provided to the user.

In addition, the processor 130 may receive a selected candidate word from the user. In an embodiment, the user may directly touch a UI screen provided by the processor 130, or select a candidate word through various input means provided in or connected to the electronic apparatus 100. For example, if the electronic apparatus 100 is a TV, the user may select a candidate word using a remote controller.

The user may not necessarily have to select one candidate word, and according to an embodiment, may select a plurality of candidate words. In still another embodiment, the processor 130 may receive input of a voice signal such as "select V" from the user and receive the selected candidate word. The processor 130 may receive input of the voice signal as described above through a microphone provided in the electronic apparatus 100 from the user, or obtain the voice signal from an external electronic apparatus provided with a microphone such as the remote controller and the smartphone.

A method for recognizing a voice from a voice signal may be variously implemented. According to an example, the processor 130 may extract a feature vector after removing noise from the input voice signal. The processor 130 may generate a phoneme sequence from the feature vector by using an acoustic model. The phoneme sequence may be a consecutive arrangement of phonemes which is a minimum unit of phonology with which meaning can be distinguished. The processor 130 may generate a word sequence by decoding a phoneme sequence on a word basis, or generate a syllable sequence by decoding the phoneme sequence in a syllable basis. The word sequence may be a consecutive arrangement of words that is distinguishable with word spacing from a text which is a voice recognition result. The syllable sequence may be a consecutive arrangement of syllables which is a unit of speaking that has one phonetic value. The processor 130 may generate, based on prior data stored in the memory 120, a plurality of words or a plurality of syllables from the phoneme sequence.

The processor 130 may determine the text which is a recognition result of a voice signal based on at least one among the word sequence and the syllable sequence. The processor 130 may combine the word sequence and the syllable sequence by substituting at least one word element among the word sequences with the syllable sequence, and determine the combined result as the text which is the voice recognition result. The processor 130 may recognize the meaning of the text based on pre-stored prior data. The processor 130 may identify, based on the recognized meaning, which candidate word the user selected. In the above, the voice recognition has been described as being performed directly by the processor 130, but an operation for converting the voice signal to the text, an operation for recognizing the meaning of the text, and the like may be performed by at least one external server apparatus depending on the embodiment. The processor 130 may store, based on a candidate word being selected by the user, the selected candidate word and the feature information of the gesture as account information corresponding to the relevant user in the memory 120. The account information corresponding to the user may be information for identifying whether the input voice signal and the gesture are input by the relevant user when the voice signal or the gesture is input in the electronic apparatus 100, and mean information that is subject to comparison with the input voice signal and the gesture.

For example, if the candidate word "V" is selected by the user, the processor 130 may store the candidate word "V" as the wake up word in the memory 120. The processor 130 may store, while simultaneously storing the wake up word, feature information of the gesture such as the word corresponding to the gesture, the word corresponding to the distance from which the gesture is sensed, and the word corresponding to the section in which the gesture is sensed as account information corresponding to the user in the memory 120.

At this time, the processor 130 may store both the word corresponding to the distance from which the gesture is sensed, and the word corresponding to the section in which the gesture is sensed as account information corresponding to the user in the memory 120, store only one word as account information in the memory 120, and may not store the word corresponding to the distance and section as account information.

An example of the user account information stored in the memory 120 is as shown in Table 1 below.

**[Table 1]**

| | user 1 account information | user 2 account information |
|---|---|---|
| gesture | V | V |
| distance | 2 m | 1m |
| section | right top | |
| wake up word | "V" | "V", "V 1m" |

If user 1 selected the candidate word "V", the processor 130 may register "V" as the wake up word, and also register the word corresponding to the distance (2 m) from which the gesture V is sensed and the section (right top) in which the same is sensed in the account information of user 1. In the case of user 2, because not only the candidate word "V", but also the candidate word "V 1 m" is also selected, the processor 130 may register both "V" and "V 1 m" as the wake up words. In addition, user 2 may register only the word (1 m) corresponding to the distance from which the gesture is sensed among the feature information of the gesture in the account information. The processor 130 may store, according to the above-described method, account information corresponding to each of a plurality of users in the memory 120. In addition, the user may modify or delete the account information if needed even after storing the account information in the memory 120. For example, the word corresponding to the gesture may be modified from "V" to "HI", and the word corresponding to the sensed distance may be modified from "2 m" to "3 m".

In addition, the processor 130 may obtain the user voice. In one embodiment, if the electronic apparatus 100 includes the microphone, the processor 130 may obtain the user voice through the microphone provided in the electronic apparatus 100. In still another embodiment, the electronic apparatus 100 may obtain the user voice through the remote controller. Specifically, the electronic apparatus 100 may perform communication with the remote controller through an Infrared Red (IR) method, and the remote controller may digitalize the voice signal of the user input through the microphone that is embedded in the remote controller and provide the same as an IR signal to the electronic apparatus 100. Alternatively, the electronic apparatus 100 may perform communication with various external electronic apparatuses capable of receiving the voice signal of the user such as the smartphone or an AI speaker through a Bluetooth or Wi-Fi method, and the external electronic apparatus may digitalize the received voice signal of the user and provide to the electronic apparatus 100.

The processor 130 may obtain a word corresponding to the obtained voice signal based on voice recognition technology. At this time, the processor 130 may transmit the obtained voice signal to an external server, and the external server may convert the received voice signal to text and transmit the same back to the electronic apparatus 100. Here, the external server may include a speech to text (STT) server, but is not limited thereto, and may include various server apparatuses capable of performing a function of the STT server. Alternatively, the processor 130 may obtain a word corresponding to a voice signal obtained through a pre-trained model embedded in the electronic apparatus 100 on its own. Because the specific voice recognition method has been described in detail in the above, redundant descriptions thereof will be omitted.

The processor 130 may identify at least one account information among a plurality of user account information stored in the memory 120 based on an obtained word. The processor 130 may identify, by comparing the obtained word with the wake up words registered in the account information of each of the plurality of users stored in the memory 120, only the account information that matches with the obtained word and the wake up word registered in the account information. In an embodiment, if the processor 130 identified the word corresponding to the user voice as "V", the processor 130 may identify the user account that registered the word matching with "V" as the wake up word. If a user account information as shown in Table 1 above is stored in the memory 120, the processor 130 may identify the account information of user 1 and user 2 that registered "V" as the wake up word.

In still another embodiment, if the processor 130 identified the word corresponding to the user voice as "V 1 m", the processor 130 may identify only the account information of user 2 that registered "V 1 m" as the wake up word. If one account information is identified, an operation for identifying account information based on the feature information of the gesture which will be described below may not be performed, and the processor 130 may immediately perform an operation based on the identified account information.

In addition, the processor 130 may obtain the feature information of the gesture by receiving input of a gesture of the user after identifying at least one account information based on the input user voice, and identify one user account information among the identified at least one account information based on the obtained feature information of the gesture.

The processor 130 may obtain the feature information of the gesture such as the word corresponding to the input user gesture, the word corresponding to the distance from which the gesture is sensed, and the word corresponding to the section in which the gesture is sensed as described above, and compare the obtained feature information with the feature information of the gesture registered in the user account information stored in the memory 120. Through the comparison, the processor 130 may identify one user account that is registered with the feature information that matches with the obtained feature information of the gesture.

For example, it may be assumed that the user account information as shown in Table 1 described above is stored in the memory 120. User 1 may utter the word "V" from the right top section of the electronic apparatus 100 from a distance that is 2 m from the electronic apparatus 100 while making the gesture "V" facing the electronic apparatus 100. The processor 130 may identify the account information of user 1 and user 2 that registered "V" as the wake up word through an input of the word "V" uttered by the user. Then, the processor 130 may sense the gesture "V" made by the user and obtain information about the word ("V") corresponding to the gesture "V", the distance (2 m) from which the gesture is sensed, and the section (right top) in which the gesture is sensed, and identify that the obtained feature information of the gesture matches with the information registered in the account information of user 1. As a result, the processor 130 may identify that the word and gesture input in the electronic apparatus 100 is input by user 1 by identifying the account information of user 1.

In addition, the processor 130 may perform, based on one account information being identified by the above-described method, an operation based on the identified account information.

When turning-on the power of the electronic apparatus 100, or executing a specific application in the electronic apparatus 100, the user may log-in through his/her user account, the electronic apparatus 100 may be operated with the user account in a logged-in state, an operate to perform only control commands of the logged-in user. For example, if user 1 is logged-in the electronic apparatus 100 with the account of user 1, a right for control of the electronic apparatus 100 may be given only to user 1. Accordingly, if user 1 inputs a command in the electronic apparatus 100 through a gesture or a voice, the electronic apparatus 100 may perform an operation corresponding thereto, but even if user 2 inputs a command in the electronic apparatus 100, the electronic apparatus 100 may not perform an operation corresponding thereto.

Therefore, the processor 130 may identify whether the user who is currently logged-in and has the right for control of the electronic apparatus 100 is a match with a user who input the voice and gesture according to the above-described method based on the account information stored in the memory 120, and if the users are a match, perform an operation corresponding to the voice or gesture of the user which is to follow thereafter.

For example, if a user who has the current right for control of the electronic apparatus 100 is user 1, and the processor 130 identified that the user who input the voice and gesture in the electronic apparatus 100 is also user 1, the processor 130 may not perform an operation for switching the user account, and receive input of a user command. At this time, the user command may be received through voice, and received through the gesture of the user.

An operating mode or operating state for receiving a user command through voice may be referred to as a "voice recognition mode" or a "voice recognition state". Likewise, the operating mode or operating state for receiving a user command through gesture may be referred to as a "gesture recognition mode" or a "gesture recognition state". The voice recognition mode or voice recognition state may not necessarily recognize only the user voice, and may be implemented in a mode that operates by recognizing other various audio signals such as sound of clapping or sound of a musical instrument. The gesture recognition mode or gesture recognition state may also be implemented to recognize not just the user making a specific gesture, but also motions such as changing of a facial expression and perform an operation corresponding thereto. The voice recognition mode may be otherwise referred to as an audio recognition mode, and the gesture recognition mode may be otherwise referred to as a motion recognition mode, a movement recognition mode, or the like.

Specifically, if the processor 130 operates in the voice recognition mode, the user may input a voice of "increase speaker volume", and the processor 130 may recognize the user voice and convert the same to text. Then, the processor 130 may perform natural language processing and pattern recognition for the text converted through a pre-trained model, and identify the intent of the user of "raising the speaker volume" through the above. The processor 130 may control a configuration of the electronic apparatus 100 or an external apparatus connected with the electronic apparatus 100 according to the identified intent of the user.

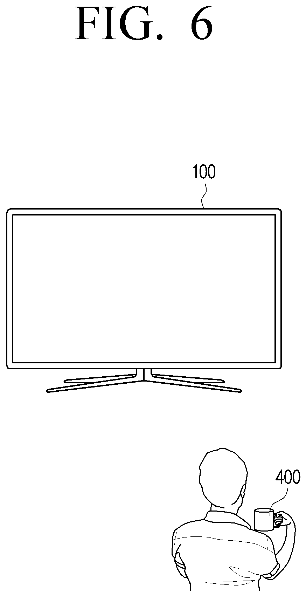

In addition, the processor 130 may perform an operation in the gesture recognition mode. Description of the gesture recognition mode will be described in detail in the description of FIG. 6 which will be described below. In the description above, the processor 130 being operable in the voice recognition mode or the gesture recognition mode has been described and provided as an example, but the processor 130 may also operate in various operating modes in which user commands may be received or a surrounding environment of the user is identified such as a user customized operating mode, a peripheral device recognizing mode, and a surrounding environment recognizing mode and an operation corresponding thereto may be performed. For example, if the processor 130 operates in the user customized operating mode, the processor 130 may analyze a viewing history or search history of a relevant user and provide customized content to the user.

In addition, the processor 130 may perform, based on identifying that the user who is currently logged-in and has the right for control of the electronic apparatus 100 is not a match with the user who input the voice and gesture according to the above-described method, a switching of the user account or register a new user account.

In an embodiment, the processor 130 may perform, based on identifying that the user who currently has the right for control of the electronic apparatus 100 is user 1, and the user who input the voice and gesture is user 2, switching of the user account for user 2 to have the right of control of the electronic apparatus 100. If switching of the user account is performed, the processor 130 may immediately receive the voice or gesture of user 2 and perform operations corresponding thereto. Alternatively, the processor 130 may not immediately perform the switching of the user account, and proceed with a process for checking whether to perform switching of the user to user 2. A question of "would you like to switch users?" for user 2 may be provided through a UI screen, or provided through voice.

In still another embodiment, the processor 130 may perform registration of a new user account. Specifically, if only the account information for user 1 and user 2 was stored in the electronic apparatus 100, and user 3 input a wake up word that was not registered in user 1 account information and user 2 account information in the electronic apparatus 100, the processor 130 may proceed with a process for registering a user account for user 3. To register a user account, the processor 130 may receive input of various information such as a name of user 3, feature information of a gesture of user 3, and a wake up word of user 3 from user 3, register in user account information of user 3, and store in the memory 120. Because the process of receiving input of a gesture of a new user, and selecting a wake up word has been described in detail in the description above, descriptions thereof will be omitted.

As described above, the processor 130 may perform switching of user accounts or registering a new user account if the currently logged-in user account and the user who input the voice and gesture are identified as not a match, but is not limited thereto, and the processor 130 may perform various operations corresponding to the input voice or gesture of the user.

Specific operations of the processor 130 of sensing a gesture of the user, obtaining feature information of the gesture and storing account information corresponding to the user based on the obtained feature information or identifying whether switching of user accounts is needed will be described in greater detail through the drawings and descriptions thereof which will be provided below.

Meanwhile, in the above, an embodiment of changes occurring such as applying, based on identifying an account of a user, a right for control to the user has been described, but the processor 130 may perform various operations in addition thereto. For example, if various information such as, for example, and without limitation, background screen, background music, preferred channel information, preferred content information, preferred volume information, display option configuration information, and the like are stored in the user account, the processor 130 may change, based on a user with a registered user account being recognized, the background screen or background music based on the information stored in the user account of the user, and immediately playback and output a preferred content of a preferred channel. In addition, a volume of the speaker may be adjusted to the preferred volume information, and various display options such as contrast or screen ratio, resolution, color properties, and the like may also be changed based on the configuration information thereof.

FIG. 3 is a diagram illustrating a word providing method of an electronic apparatus according to one or more embodiments of the disclosure.

Referring to FIG. 3, the processor 130 may output a word "V" 220 by inputting the gesture 200 of the user according to a learned neural network model stored in the memory 120. Here, the learned neural network model may receive input of a gesture of the user, and extract a feature map 210 of the gesture, and as an artificial intelligence model trained to provide the word 220 based on the extracted feature map 210, include a feature extracting part 310 and a word providing part 320.

The feature extracting part 310 may receive input of an image that captured the gesture 200 of the user and generate the feature map 210 of the gesture 200. The feature extracting part 310 may be consist of a plurality of neural network layers that extract features of an image.

For example, the feature extracting part 310 may consist of a convolution layer and a pooling layer. If the image that captured the gesture 200 of the user is input in the convolution layer of the feature extracting part 310, the captured image may be divided into a plurality of sections, and a filter capable of performing a convolution operation for each section may be applied. Feature values for the plurality of sections may be obtained as a result of the convolution operation, and a feature map may be generated based on the obtained feature values. The generated feature map may be input in the pooling layer of the feature extracting part 310, and the feature map input from the pooling layer may be subject to operations such as max pooling and average pooling. Through the operations described, amount of information of the feature map input in the pooling layer may be down sampled. The processor 130 may obtain the feature map 210 corresponding to the gesture of the user that is down sampled to an amount of information of a suitable size through the feature extracting part 310 as described above.

The word providing part 320 may receive input of the feature map 210 output from the feature extracting part 310, classify the image with a pre-defined word, and provide the same to the user. Here, the pre-defined word may mean a word that is already stored in the word providing part 320. For example, if the word providing part 320 is only able to classify the gesture of the user with words including "V", "HI", "promise", "gun", and "good luck", the pre-defined word may include "V", "HI", "promise", "gun", and "good luck".

In an embodiment, the word providing part 320 may consist of a fully connected layer. In the word providing part 320, the feature map 210 is input in the fully connected layer and the feature map 210 in a 2-dimensional arrangement form may be planarized to a 1-dimensional arrangement form. Thereafter, the planarized 1-dimensional arrangement may be subject to various activation functions such as Softmax and output a probability on which word among the pre-defined words does the input gesture 200 of the user correspond to. If the gesture 200 of the user has the highest probability for corresponding to the word 220 "V", the word providing part 320 may provide the word "V" 220 to the user. If the gesture of the user was a gesture showing a palm with five fingers spread out, the word providing part 320 may determine that the gesture of the user has the highest probability to correspond to the word "HI" and provide the user with the word "HI".

The feature extracting part 310 or the word providing part 320 may consist of a plurality of neural network layers. At least one layer may have at least one weight value, and perform a layer operation through an operation result of a previous layer and at least one defined operation. Examples of a neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, and a Transformer, and the neural network in the disclosure may not be limited to the above-described examples.

The processor 130 may obtain a word corresponding to the gesture of the user through the learned neural network model stored in the memory 120 as described above, and receive the word provided from the external server. For example, the processor 130 may transmit sensing data on the gesture 200 of the user obtained through the sensor connected with the interface 110 or the sensor embedded in the electronic apparatus 100 to the external server, and the external server may output a word corresponding to the gesture 200 by inputting the received sensing data in the learned neural network model. The external server may transmit the output word to the electronic apparatus 100, and the processor 130 may provide the user with the word received from the external server.

In addition, the processor 130 may perform only the role of generating the feature map 210 of the gesture 200, and the external server may also perform only the role of outputting a word corresponding to the feature map 210 based on the feature map 210. In order to output a word corresponding to the feature map 210, because pattern data for the pre-defined words (e.g., "V", "HI") have to all be stored, size of data that has to be stored in the memory 120 may increase significantly as a number of pre-defined words increase. Accordingly, the memory 120 may store only a neural network layer relevant to the feature extracting part 310, and the processor 130 may transmit the feature map 210 corresponding to the gesture 200 to the external server for the external server to perform the role of the word providing part 320, and receive the word 220 from the external server.

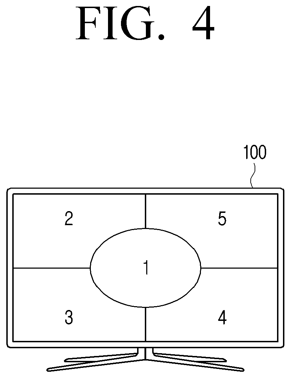

As described above, the processor 130 may generate a word corresponding to the gesture through the learned neural network model by sensing the gesture of the user. In FIG. 4 and the description thereof which will be described below, specific operations of the processor 130 obtaining information about the distance from which the gesture is sensed, and the the section in which the gesture is sensed will be described in detail.

FIG. 4 is a diagram illustrating a live view providing method of an electronic apparatus according to one or more embodiments of the disclosure.

Referring to FIG. 4, the electronic apparatus 100 may include a display 140, and the processor 130 may display a live view screen by dividing the display 140 into a plurality of sections.

Here, "live view" may mean a real-time screen showing a video incident through a camera lens as is. If a capture command is input while the live view is being displayed, the camera may capture the image incident at that time-point using the image sensor, and store the captured image data.

The processor 130 may control, based on the camera being included in the electronic apparatus 100, or an external camera or an apparatus included with a camera being connected with the electronic apparatus 100, the display 140 to display the live view screen provided from the camera. The processor 130 may display a graphic object together to distinguish a section on the live view screen, or express a plurality of sections without a separate boundary line. In FIG. 4, a first section being displayed in a circular shape at a center portion, and a second section to a fifth section being displayed in the surrounding thereof is shown. The user may directly know which section his/her gesture is displayed in among the plurality of sections through the live view screen. In FIG. 4, although not shown, the processor 130 may display a distance on the live view screen for the user to check how far of a distance his/her gesture is sensed from the electronic apparatus 100.

For example, as shown in FIG. 4, the processor 130 may display the live view screen by dividing the same into a center 1, a left top 2, a left bottom 3, a right bottom 4, and a right top 5. Through the live view screen described above, the user may check the section in which his/her gesture is sensed from a process for storing the feature information of the gesture in the account information corresponding to the user or a process for executing several operating modes of the electronic apparatus 100 by inputting the gesture of the user.

In an embodiment, if the user tries to register the gesture "V" and the section "right top" in his/her account information, the user may check through the live view screen that his/her gesture is being accurately sensed at the right top section. In still another embodiment, the user with the word "V" corresponding to the gesture and the word "right top" corresponding to the section in which the gesture is sensed registered in the account information has to input the gesture for the gesture "V" to be sensed in the "right top" section in order to perform account switching to his/her account, and the user may check through the live view screen whether his/her gesture is being accurately sensed in the right top section.

In addition, although not shown in detail in FIG. 4, the processor 130 may display, through the live view screen, information about the distance from which the gesture is sensed. For example, the processor 130 may measure the distance between the user and the electronic apparatus 100 by being connected with the interface 110 or through various sensors capable of measuring the distance with the user such as the LiDAR sensor, the ToF sensor, and the like embedded in the electronic apparatus 100, and provide information about the distance between the user and the electronic apparatus 100 by displaying the measured distance as "3m", "2.5", "1.3", and the like on the live view screen. The distance information may be displayed for each section. The user may check whether his/her gesture is being sensed from how far of a distance through the provided distance information.

In addition, the processor 130 may provide a candidate word based on a word corresponding to a section in which the gesture of the user is identified and a word corresponding to a distance from which the gesture of the user is identified. At this time, "first information" may be defined as information about the section in which the gesture of the user is identified among the plurality of sections of the live view screen, and "second information" may be defined as information about a distance between the user and the electronic apparatus 100 provided through the live view screen.

For example, if the gesture of the user is displayed at the right top of the live view screen, and the distance with the user displayed on the live view screen is 3 m, the first information may be "right top" and the second information may be "3 m". The processor 130 may provide candidate words such as "right top", "3 m", or "right top 3 m" to the user based on the first information and the second information.

The processor 130 may store, based on the user selecting a specific candidate word among the candidate words provided based on the first information and the second information, the selected candidate word in the account information corresponding to the user in the memory 120.

For example, if the user selected the candidate word "right top", the word "right top" may be registered in a user account information corresponding to a relevant user as the wake up word of the relevant user. Accordingly, if the user inputs a voice "right top" in the electronic apparatus 100, the processor 130 may be able to identify the account information of the relevant user that registered the word "right top" as the wake up word. Because the registering of the wake up word in the user account information or the user account information identifying operation based on the wake up word has been described in detail in the description of FIG. 2, detailed descriptions thereof will be omitted.

The processor 130 may obtain the first information by analyzing the live view screen that captured the user. Here, the analyzing the live view screen may mean identifying from which section among the plurality of sections of the live view screen is the gesture of the user sensed. For example, the processor 130 may sense a gesture of the user that is distinguished from the surrounding environment that is fixed in the captured video by continuously monitoring the live view screen, and identify that the sensed gesture as performed in a section corresponding to the right top of the live view screen.

In addition, the processor 130 may obtain the first information by receiving a user selection. For example, the processor 130 may receive input of a user selection for selecting the right top section among the plurality of sections of the live view screen, and in this case, the "right top" section may become the first information.

The processor 130 may perform the above-described specific operations through the external display apparatus by providing a control signal to the external display apparatus. For example, if the electronic apparatus 100 is connected with a TV through an output port of the electronic apparatus 100, the processor 130 may transmit a control signal that includes a video that captured the user and displays the live view screen divided into a plurality of sections to the TV through the output port. In addition, the TV may receive an input selecting one section among the plurality of sections of the live view screen from the user, and transmit first information about the received one section to the electronic apparatus 100, and the processor 130 may provide at least one candidate word to the user based on the first information received from the TV.

In the description above, only the TV has been provided as an example for the external display apparatus, but various external display apparatuses capable of displaying a video such as a desktop PC, a laptop PC, a tablet PC, and a smartphone may be connected with the electronic apparatus 100 and transmit and receive various signals.

In the description above, only an example of being connected with the external display apparatus through the output port of the electronic apparatus 100 has been described, but this is merely one example, and the processor 130 may transmit and receive various signals with the external display apparatus through wireless communication methods such as Bluetooth, Wi-Fi, and the like.

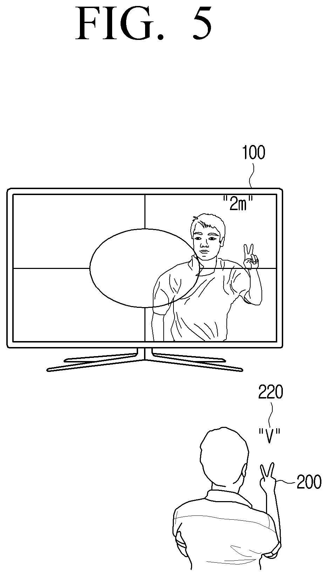

FIG. 5 is a diagram illustrating an operation of an electronic apparatus according to one or more embodiments of the disclosure.

Referring to FIG. 5, if a user inputs the gesture 200 and the word 220 "V" in the electronic apparatus 100, the processor 130 may identify an account information corresponding to the relevant user.

For example, it may be assumed that user 1 stored "V" as the wake up word, "V" as the word corresponding to the gesture, "2 m" as the word corresponding to the distance from which the gesture is sensed, and "right top" as the word corresponding to the section in which the gesture is sensed as shown in Table 1 described above. User 1 may check that his/her gesture is being sensed from a distance that is 2 m from the electronic apparatus 100 through the text "2 m" displayed on the live view screen, and that his/her gesture is being sensed at the right top among the plurality of sections through the live view screen that is divided into a plurality of sections and displayed.

User 1 may utter the word 220 "V" after checking that his/her gesture 200 is being sensed from a distance that is 2 m from the electronic apparatus 100 and from the right top section. The processor 130 may receive input of the word uttered from the user, receive input of the gesture of the user, and identify the account information of user 1 corresponding to the user who input the word and gesture. The processor 130 may perform, based on having identified the account information of user 1, various operations based on a result of identification after identifying whether switching of the user account is necessary.

Through the above-described live view screen, the user may accurately check whether his/her gesture is sensed from a distance that is spaced apart by how much from the electronic apparatus 100, and whether his/her gesture is being accurately sensed in which section by the electronic apparatus 100, and the user may be able to more accurately input his/her gesture in the electronic apparatus 100.

In the descriptions of FIG. 4 and FIG. 5 in the description above, only the live view screen being divided into a total of five sections has been described, but this is merely one example, and the live view screen may be divided into sections of various numbers by various standards such as dividing the sections to only three sections of "left side", "center", and "right side".

The electronic apparatus 100 of the disclosure may operate based on a gesture of the user, and operate based on an object of the user as in the description of FIG. 1 to FIG. 5 described above. Specific operations of the electronic apparatus 100 that is based on an object of the user will be described in detail in the description of FIG. 6 which will be described below.

FIG. 6 is a diagram illustrating an operation of an electronic apparatus according to one or more embodiments of the disclosure.

Referring to FIG. 6, the electronic apparatus 100 may sense an object (e.g., cup) 400 of the user and store the account information corresponding to the user in the memory 120, and identify whether switching of the user account is necessary.

Here, the "object of the user" may mean an object sensed in an image obtained by the processor 130. Specifically, the "object of the user" may include an object possessed by the user. The above may mean an object that the user is holding with his/her hand, and include all random objects that the user is in contact with. For example, if the user is holding a mobile phone in his/her hand, the object possessed by the user may include the mobile phone of the user. In addition, if a foot of the user is in contact with a ball, the object possessed by the user may include the ball that the user's foot is in contact with. As in FIG. 5, if the user is holding the cup 400 with his/her hand, the object of the user may be the cup 400. In addition, the "object of the user" may also include objects that are not the object in contact with the user. For example, even if the user is not present in the image obtained by the processor 130 and only the cup 400 is present, the processor 130 may identify the user account information based on the cup present in the image.

First, an operation for sensing an object of the user and obtaining the feature information of the object will be described.

The processor 130 may obtain sensing data on the cup 400 through a sensor connected with the interface 110 or a sensor embedded in the electronic apparatus 100. The processor 130 may identify that the object of the user is the cup 400 by using the learned neural network model based on sensing data obtained through the sensor. Referring back to FIG. 3, the processor 130 may not only classify the gesture 200 to a pre-defined word, but also classify the object of the user to a pre-defined word using the learned neural network model that includes the feature extracting part 310 and the word providing part 320.

Specifically, if an image of the object of the user is input in the feature extracting part 310, a feature map is generated through a plurality of layers included in the feature extracting part 310, and if the generated feature map is input in the word providing part 320, the input feature map may be classified to a pre-defined word. For example, if an image that captured the cup 400 is input in the feature extracting part 310, the feature map 210 corresponding to the image of the cup 400 is generated, and if the feature map 210 is input in the word providing part 320, the word "cup" may be provided to the user based on a result indicating the highest probability of corresponding to the word "cup" among a plurality of pre-defined words. Because detailed descriptions of a word providing method through the learned neural network model and detailed configurations of the learned neural network model have been described in detail in the description of FIG. 3, the same will be omitted below.

In addition, the processor 130 may obtain information on the section in which the cup 400 possessed by the user is sensed and the sensed distance using the same method as the method for obtaining information on the section in which the above-described gesture of the user is sensed and the sensed distance by the sensor. The processor 130 may provide candidate words to the user based on a word corresponding to the object, a word corresponding to the section in which the object is sensed, and words corresponding to the distance from which the object is sensed received through the learned neural network model.

For example, if the cup 400 possessed by the user is sensed from the distance that is 2 m from the electronic apparatus 100 and from the right top section based on the center point of the electronic apparatus 100, the processor 130 may provide the user with candidate words such as "cup", "2 m", "right top", "cup 2 m", and "cup right top" based on the feature information of the object such as "cup", "2 m", and "right top".

In addition, the processor 130 may store, based on a candidate word being selected by the user among the at least one candidate word provided, the candidate word selected by the user and the feature information of the object in the memory 120 as account information corresponding to the user. Because the candidate word selecting method of the user through a UI screen, voice recognition, or the like has been described above, detailed descriptions thereof will be omitted.

An example of the candidate word and the feature information of the object being stored in the memory 120 as account information corresponding to the user is as shown in Table 2.

**[Table 2]**

| | user 3 account information | user 4 account information |
|---|---|---|
| object | cup | cup |
| distance | 2 m | 1m |
| section | right top | |
| wake up word | "cup", "cup right top" | "cup", "cup 1m" |

According to FIG. 2 user 3 may be sensed by the sensor from a distance that is 2 m from the electronic apparatus 100 and while in possession of the cup 400 at the right top section. The processor 130 may provide various candidate words such as "cup", "cup 2 m", "cup right top", "2 m", and "2 m right top" to user 3 based on a state of user 3, receive selection of candidate words such as "cup" and "cup right top" from user 3 and store "cup" and "cup right top" as wake up words in the memory 120. In addition, the processor 130 may obtain a user voice and a word corresponding to the user voice through voice recognition, and obtain feature information of the object of the user by obtaining an image that captured the object of the user. Because the detailed method for obtaining a word corresponding to the user voice and the detailed method for obtaining feature information through the captured image have been described above, the same will be omitted herein.

The processor 130 may identify at least one account information among a plurality of user account information stored in the memory 120 based on the obtained word corresponding to the user voice. The processor 130 may identify only the account information that matches with the obtained word and the wake up word registered in the account information by comparing the word corresponding to the user voice and the wake up word registered in the account information of each of the plurality of users stored in the memory 120. For example, if the processor 130 identified the word corresponding to the user voice as "cup", the processor 130 may identify the user account that registered the word matching with "cup" as the wake up word. If a user account information as in Table 2 described above is stored in the memory 120, the processor 130 may identify account information of user 3 and user 4 that registered "cup" as the wake up word.

Then, the processor 130 may obtain the feature information of the object of the user obtained through the captured image, and identify account information of one user among the identified at least one account information based on the obtained feature information of the object.

The processor 130 may obtain the feature information of the object such as the word corresponding to the object of the user, the word corresponding to the distance from which the object is sensed, and the word corresponding to the sensed section as described above, and compare the obtained information with the feature information of objects registered in the user account information stored in the memory 120. Through comparison, the processor 130 may identify one user account registered with the feature information that matches with the feature information of the obtained object.

For example, it may be assumed that the user account information as shown in Table 2 above is stored in the memory 120. User 3 may utter the word "cup" from a distance that is 2 m from the electronic apparatus 100 while in possession of the cup in the right top section of the electronic apparatus 100. The processor 130 may identify the account information of user 3 and user 4 that registered "cup" as the wake up word through input of the word "cup" uttered by the user. Thereafter, the processor 130 may obtain feature information of the object on the word corresponding to the object ("cup"), the word corresponding to the distance from which the object is sensed (2 m), and the word corresponding to the section in which the object is sensed (right top) by sensing the cup which is the object of the user, and identify that the obtained feature information of the object matches with the feature information of the object registered in the account information of user 3. Ultimately, the processor 130 may identify that the word and object input in the electronic apparatus 100 is input by user 3 by identifying the account information of user 3.

In addition, the processor 130 may perform, based on one account information being identified by the above-described method, an operation based on the identified account information. Because the various operations performed by the processor 130 based on the identified account information have been described in detail in the description of FIG. 2, descriptions thereof will be omitted.

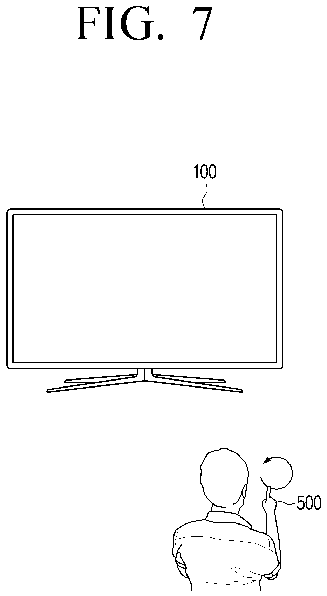

If the processor 130 identifies one account information, switching of the user account may not be performed if the identified one account information matches with the account information of the user that has the current right for control, and operate in the gesture recognition mode. The gesture recognition mode may mean a mode for performing an operation corresponding to the gesture of the user, and descriptions relating thereto will be described in detail in the description of FIG. 7.

FIG. 7 is a diagram illustrating a gesture recognition mode operating method of an electronic apparatus according to one or more embodiments of the disclosure.

Referring to FIG. 7, the user may input a gesture 500 in the electronic apparatus 100, and the processor 130 may perform an operation corresponding to the input gesture 500 of the user. In the description of FIG. 7, because the gesture 500 of the user is different from the gesture 200 registered in the user account information used to identify the user account, the processor 130 may recognize the gesture 500 of the user as a user command.

The memory 120 may store the gesture 500 of the user and an operation corresponding to the gesture. For example, the processor 130 may match the gesture 500 that moves a finger of the user in an anti-clockwise direction with an operation of "return to a previous screen" and store in the memory 120. If the processor 130 operates in the gesture recognition mode, the processor 130 may sense a gesture of the user through the sensor connected with the interface 110 or the sensor embedded in the electronic apparatus 100, and if the sensed gesture of the user is identified as matching with a "gesture of moving a finger in an anti-clockwise direction" stored in the memory 120, the operation of "returning to a previous screen" which is the operation corresponding to the gesture may be performed.

In addition, when the processor 130 operates in the gesture recognition mode, the processor 130 may newly register, based on determining that the gesture of the user sensed through the sensor is not a match with a plurality of gestures stored in the memory 120, a gesture sensed through the sensor.

For example, if the user makes a gesture by spreading one finger and raising the finger in an upward direction, and if a gesture that matches with the gesture of raising the finger in the upward direction is not stored in the memory 120, the processor 130 may provide the user with a UI screen asking whether to newly register the gesture of raising the finger in the upward direction. If the user accepts newly registering the gesture, the processor 130 may provide the user with a UI screen to select an operation corresponding to the gesture that is to be newly registered. The user may select an operation of "raising the speaker volume" among several operation items provided on the UI screen, and the operation of "raising the speaker volume" may be mapped with the "gesture of raising a finger in the upward direction" and stored in the memory 120.

The above-described UI screen may be displayed due to the processor 130 controlling the display 140 included in the electronic apparatus 100, and displayed by providing a control signal to the external display apparatus connected with the electronic apparatus 100.

In addition, the processor 130 may also store, even in the gesture recognition mode, a word for the gesture of the user and the feature information of the gesture together in the memory 120 in order to more accurately recognize the gesture of the user. Every time the user rotates the finger in the anti-clockwise direction, and an operation corresponding thereto is performed, because the gesture 500 of the user is recognized even when not desired by the user and a result that is not desired by the user can be generated, the processor 130 may store the word for the gesture and information about the distance and section in which the gesture is sensed together in the memory 120. For example, the processor 130 may store the gesture 500 of "rotating the finger in the anti-clockwise direction", the word of "previous screen", the distance of "1 m", and section information of "right bottom" together in the memory 120, and the processor 130 may perform an operation corresponding to the gesture of the user only when the gesture, the word, the distance, and the section information are all satisfied.

In the above-described description, the processor 130 has been described as sensing only simple motions that uses the hand of the user and performing an operation corresponding thereto, but this is merely one example, and various motions that use the body of the user may be sensed.

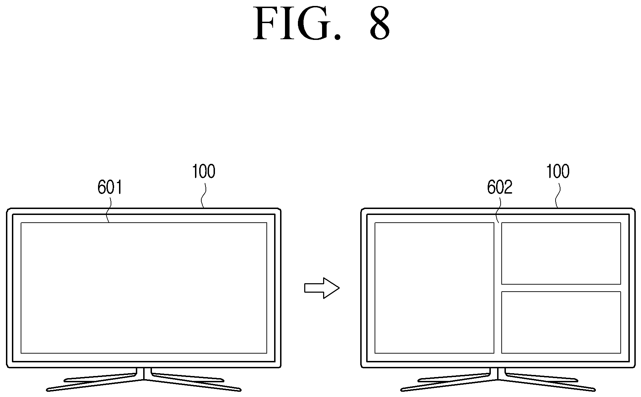

As described above, the processor 130 may operate in the gesture recognition mode if switching of the user account is not needed whereas, the user account may be switched if switching of the user account is recognized as needed and an operation based on configuration information corresponding to the switched user account information may be performed. Descriptions on the operation based on the configuration information corresponding to the switched user account information will be described in detail in the description of FIG. 8 which will be described below.

FIG. 8 is a diagram illustrating a user account switching operation method of an electronic apparatus according to one or more embodiments of the disclosure.

Referring to FIG. 8, if an account is switched from an account of user 1 to an account of user 2, the processor 130 may change a preference of the electronic apparatus 100 based on the configuration information corresponding to the account information of user 2. In other words, based on account information corresponding to a voice, a gesture, or an object of a new user being identified while another user account is logged-in, the processor 130 may switch to a user account of a new user based on the identified account information, and change the preference of the electronic apparatus 100 based on the configuration information corresponding to the user account of the new user.

Here, the configuration information corresponding to the user account information may mean preference values of electronic apparatuses set respectively for each of the users. For example, the configuration information corresponding to the user account information may include a display resolution, a multiple display setting value, a display screen refresh rate, a display layout, a connection setting value with an external apparatus, a sound setting value, a Bluetooth connection setting value, an internet connection setting value, and the like.

The processor 130 may identify, based on the account of user 1 being logged-in, switching of account to the account of user 2 as necessary if the word and gesture corresponding to the account information of user 2 is input, and the processor 130 may perform the switching of account to the account of user 2 based on the identified result. The processor 130 may perform the switching of account to the account of user 2 and check the configuration information of the electronic apparatus 100 that user 2 has pre-set, and change the preference of the electronic apparatus 100 based therefrom.

For example, user 1 may store a single-view state 601 by which the display 140 is configured to display only one content as configuration information corresponding to the account information of user 1 in the memory 120, and user 2 may store a multi-view state 602 by which the display is configured to display three content simultaneously as configuration information corresponding to the account information of user 2 in the memory 120. Based on the above-described configuration information, the processor 130 may change the preference of the electronic apparatus 100 from a display setting of the single-view state 601 to a display setting of the multi-view state 602 while performing an account switching operation from the account of user 1 to the account of user 2.

In the description above, only the operation of the setting of the display being changed such as the preference of the electronic apparatus 100 being changed and the like from the single-view state 601 to the multi-view state 602 has been described, but this is merely one example, and a number and type of external apparatuses connected with the electronic apparatus 100 may be changed or the preference of the electronic apparatus 100 may be changed according to various configuration information corresponding to the user account information such as the speaker volume of the electronic apparatus 100 being changed, and the like.

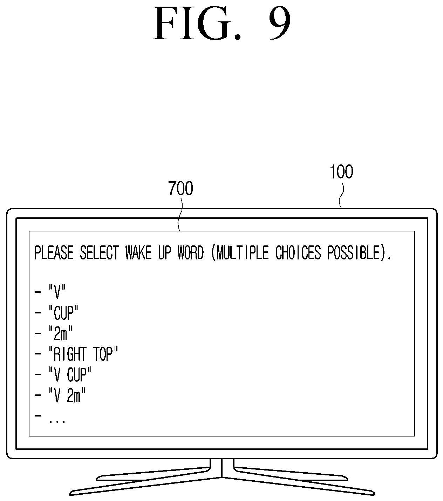

FIG. 9 is a diagram illustrating a candidate word providing method of an electronic apparatus according to one or more embodiments of the disclosure.

Referring to FIG. 9, the processor 130 may provide a control signal to display a UI screen 700 with which a plurality of candidate words can be provided to the user, and the user may select at least one candidate word among the plurality of provided candidate words as the wake up word.

For example, the processor 130 may combine a word corresponding to the sensed gesture of the user ("V"), a word corresponding to the sensed object ("cup"), a word corresponding to a distance from which the gesture or object of the user is sensed ("2 m"), and a word corresponding to the sensed section ("right top") and provide as a candidate word or provide each as candidate words individually. Specifically, "V", "cup", "2 m", and "right top" may be provided to the user as candidate words, and the above-described words such as "V", "cup", "2 m", and "right top" may be combined and provided to the user as a candidate word. The user may select only "V" among the plurality of candidate words provided through the UI screen 700 as the wake up word, and select the plurality of candidate words of "V", "cup", and "V 2 m" as the wake up words.

In addition, the processor 130 may receive input of a random word from the user in addition to receiving selection of a portion among the candidate words provided to the user from the user and registering as the wake up word in the account information corresponding to the user. For example, the user may input a word "left bottom" and try to register the wor as the wake up word in his/her account information.

At this time, because the word "right top" is already registered as the wake up word in the account information of the relevant user, a conflict may occur between the already registered wake up word of "right top" and the word "left bottom" that the user is trying to register in his/her account information. The processor 130 may provide, in order to prevent a situation of conflict occurring between words, a UI screen providing a warning message that a conflict can occur and a substitute word to the user when the user is trying to register a word as the wake up word that conflicts with the already registered wake up word.

For example, the processor 130 may provide the user with a UI screen that includes the message "the word 'left bottom' cannot be registered because it conflicts with an already registered wake up word" or "would you like to register the word '2 m' instead of the word 'left bottom' as the wake up word?".

In the description above, only conflict that can occur between the word corresponding to gesture and the word corresponding to the section in which the object is sensed has been described, but this is merely one example, and the processor 130 may provide substitute words even in cases of various conflicts that can occur between words such as the user trying to register "4 m" as the new wake up word despite the wake up word that is already registered in the account information of the user being "2 m".

The UI screen shown in FIG. 9 may be displayed on the display 140 of the electronic apparatus 100, and based on the processor 130 providing a control signal to display a UI screen for providing a plurality of candidate words to the user to an external display apparatus that is connected with the electronic apparatus 100, the external display apparatus may display the UI screen

In FIG. 9, only a UI screen displaying a plurality of candidate words has been shown, but this is merely one example, and the processor 130 may provide a plurality of candidate words to the user through various methods such as outputting a voice to provide the user with a plurality of candidate words.

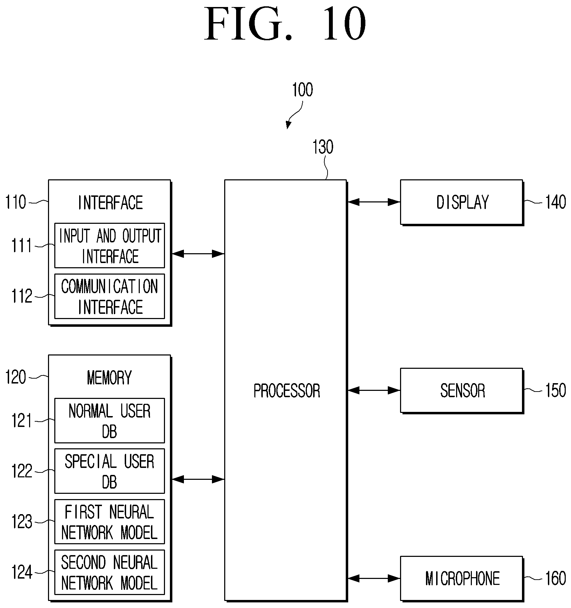

FIG. 10 is a block diagram illustrating a detailed configuration of an electronic apparatus according to one or more embodiments of the disclosure.

Referring to FIG. 10, the electronic apparatus 100 according to an embodiment of the disclosure may not only include the interface 110, the memory 120, and the processor 130, but further include the display 140, a sensor 150, a microphone 160, and the like. However, the configurations as shown in FIG. 2 and FIG. 10 are merely examples, and in implementing the disclosure, a new configuration may be added in addition to the configurations as shown in FIG. 2 and FIG. 10 or a portion of the configurations may be omitted. In the descriptions of FIG. 10, the descriptions that overlap with the descriptions of FIG. 2 will be omitted.

The interface may be divided into an input and output interface 111 and a communication interface 112.

The input and output interface 111 may be a configuration for inputting and outputting various external signals. The input and output interface may be connected with various external memories or external sources (e.g., web server, user terminal device, etc.), and receive input of various data. The input and output interface may be implemented as at least one or more interface among a high-definition multimedia interface (HDMI), a mobile high-definition link (MHL), a universal serial bus (USB), a USB C-type, a display port (DP), Thunderbolt, a video graphics array (VGA) port, an RGB port, a Dsubminiature (D-SUB), and a digital visual interface (DVI). At least a portion among the input and output interface may be connected with the communication interface. For example, the input and output interface may transmit information received from an external apparatus to the communication interface or transmit information received through the communication interface to an external apparatus.

The communication interface 112 may be a configuration for performing communication with at least one external apparatus. The communication interface may include at least one wireless communication module, at least one wired communication module, and the like. Each communication module may be implemented in at least one hardware chip form. The wireless communication module may include at least one module among a Wi-Fi module, a Bluetooth module, an infrared communication module, or other communication modules. In addition thereto, the communication interface may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like. The wired communication module may include at least one among, for example, a local area network (LAN) module, an Ethernet module, a pair cable, a coaxial cable, an optical fiber cable, or an ultra wide-band (UWB) module. The communication interface may be implemented in various forms as described above, and receive, by performing communication with the external apparatus, various data from the external apparatus.

The memory 120 may include a normal user database (DB) 121 and a special user DB 122. Here, the normal user DB 121 and the special user DB 122 may respectively mean a database that systematically organized normal user account information and a database that systematically organized special user account information. In other words, the memory 120 may divide account information of a normal user and account information of a special user and store the same.

For example, an account of a special user may include an administrator account of the electronic apparatus 100. The memory 120 may further strengthen a security function by managing the account of the normal user and the administrator account of the electronic apparatus 100 separately.

In an embodiment, information about time during which the special user maintained a gesture and/or information about consecutive gestures of the special user may be included in the account information of the special user in the special user DB 122 that is stored in the memory 120. Specifically, information about the special user having to maintain a gesture of "spreading wide five fingers" for "20 seconds or more" may be included in the account information of the special user, or information about the special user having to consecutively make a gesture of "OK" with fingers after making the gesture "spreading wide five fingers" may be included in the account information of the special user. In other words, because the normal user DB 121 and the special user DB 122 are divided and stored, the processor 130 may not consider changes in gesture according to time for a gesture of the normal user whereas, the processor 130 may consider the changes in gesture according to time for a gesture of the special user.

In addition, the memory 120 may include a first neural network model 123 and a second neural network model 124. Here, the first neural network model 123 and the second neural network model 124 may be learned neural network models, and may mean a model capable of including a plurality of neural network layers. Specifically, the first neural network model 123 may include a learned neural network model so as to receive input of an image that captured the gesture of the user and output a word corresponding to the gesture of the user. In addition, the second neural network model 124 may include a learned neural network model so as to receive input of an image that captured the object of the user and output a word corresponding to the object of the user.

As described above, the first neural network model 123 and the second neural network model 124 may not be stored in the memory 120. If the memory 120 is not storing the first neural network model 123 and the second neural network model 124, the processor 130 may transmit the image that captured the gesture or object to the external server, and the external server may output a word corresponding to the captured gesture or object and transmit the output word to the electronic apparatus 100.

The display 140 may display a live view screen by receiving control of the processor 130 or perform an operation providing the user with a UI screen.

The display 140 may be implemented as a display including self-emissive devices or a display including non-emissive devices and a backlight. For example, the display 140 may be implemented in displays of various form such as, for example, and without limitation, a liquid crystal display (LCD), an organic light emitting diode (OLED) display, a light emitting diode (LED), a micro LED, a mini LED, a plasma display panel (PDP), a quantum dot (QD) display, a quantum dot light emitting diodes (QLED), or the like. In the display 140, a driving circuit, which may be implemented in a form of an a-si TFT, a low temperature poly silicon (LTPS) TFT, an organic TFT (OTFT), or the like, a backlight unit, and the like may be included.

The sensor 150 may be a configuration for sensing a gesture of a user or an object of a user. The sensor 150 may include sensors of various types capable of sensing a movement of a user, an object of a user, a distance with a user, and the like using a camera, a LiDAR sensor, a ToF sensor, and the like.

The microphone 160 may obtain a signal for a sound or a voice that is generated outside of the electronic apparatus 100. Specifically, the microphone 160 may obtain a vibration according to sound or voice generated outside of the electronic apparatus 100, and convert the obtained vibration to an electrical signal.

Specifically, the microphone 160 according to the disclosure may obtain a voice signal for a user voice that is generated by an utterance of a user. Then, the obtained voice signal may be converted to a signal of a digital form and stored in the memory 120.

In FIG. 10, a configuration of an electronic apparatus that includes both the display and the microphone has been shown and described, but at least a portion among these configurations may be implemented to be included in an external apparatus as described above.

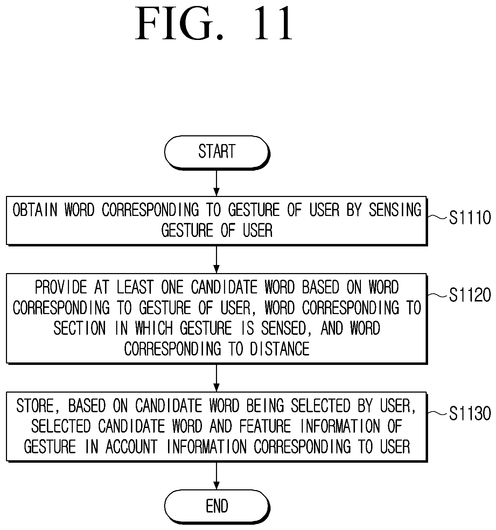

FIG. 11 is a flowchart illustrating an account information storing method of an electronic apparatus according to one or more embodiments of the disclosure.

Referring to FIG. 11, the electronic apparatus may obtain a word corresponding to a gesture of a user by sensing the gesture of the user (S1110).

For example, the electronic apparatus may obtain sensing data for the gesture of the user through the sensor, and obtain a word corresponding to the gesture by inputting the sensing data in a learned neural network model. Here, the learned neural network model may include an artificial intelligence model trained to receive input of sensing data for the gesture such as a captured image of the gesture and classify to one word among pre-defined words. According to another embodiment, a word corresponding to the gesture may also be obtained by directly performing image analysis rather than using the learned neural network model.

Then, the electronic apparatus may provide the user with at least one candidate word based on a word corresponding to the gesture of the user, a word corresponding to the section in which the gesture is sensed, and a word corresponding to the distance from which the gesture is sensed (S1120).

For example, the electronic apparatus may provide each of the word corresponding to the gesture of the user ("V"), the word corresponding to the section in which the gesture is sensed ("right top"), and the word corresponding to the distance from which the gesture is sensed ("2 m") individually to the user as candidate words. Alternatively, the electronic apparatus may combine the word corresponding to the gesture of the user ("V"), the word corresponding to the section in which the gesture is sensed ("right top"), and the word corresponding to the distance from which the gesture is sensed ("2 m") and provide to the user as a candidate word.

Then, the electronic apparatus may store, based on a candidate word being selected by the user, the selected candidate word and the feature information of the gesture in the account information corresponding to the relevant user (S1130).

For example, if the candidate word "V" is selected by the user, the electronic apparatus may store the word "V" as the wake up word of the relevant user, and store the feature information of the gesture together in the account information corresponding to the relevant user.

Here, the feature information of the gesture may include the word corresponding to the gesture of the user, the word corresponding to the section in which the gesture is sensed, and the word corresponding to the distance from which the gesture is sensed.

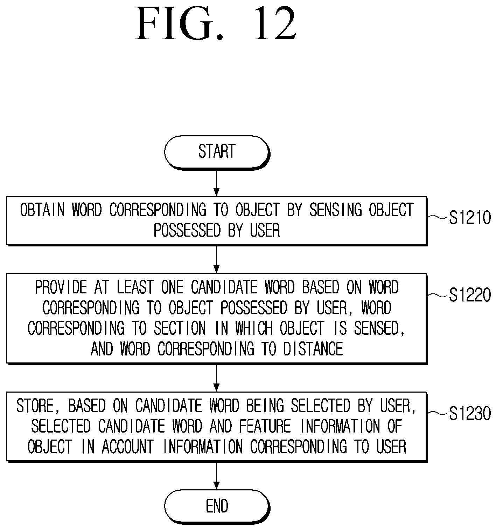

FIG. 12 is a flowchart illustrating an account information storing method of an electronic apparatus according to one or more embodiments of the disclosure.

Referring to FIG. 12, the electronic apparatus may obtain a word corresponding to an object by sensing the object of the user (S1210).

For example, the electronic apparatus may obtain sensing data for an object of the user through the sensor, and obtain a word corresponding to the object by inputting the sensing data in a learned neural network model. Here, the learned neural network model may include an artificial intelligence model trained to receive input of sensing data for the object such as a captured image of the object and classify to one word among pre-defined words. The above also may not necessarily have to use the learned neural network model, and may identify an object through image analysis, and obtain a word corresponding to the object.

Then, the electronic apparatus may provide the user with at least one candidate word based on a word corresponding to the object of the user, a word corresponding to the section in which the object is sensed, and a word corresponding to the distance from which the object is sensed (S1220).

For example, the electronic apparatus may provide each of the word corresponding to the object of the user ("cup"), the word corresponding to the section in which the object is sensed ("right top"), and the word corresponding to the distance from which the object is sensed ("2 m") individually to the user as candidate words. Alternatively, the electronic apparatus may combine the word corresponding to the object of the user ("cup"), the word corresponding to the section in which the object is sensed ("right top"), and the word corresponding to the distance from which the object is sensed ("2 m") and provide to the user as a candidate word.

Then, the electronic apparatus may store, based on a candidate word being selected by the user, the selected candidate word and the feature information of the object in the account information corresponding to the relevant user (S1230).

For example, if a candidate word "cup" is selected by the user, the electronic apparatus may store the word "cup" as the wake up word of the relevant user, and store the feature information of the object together in the account information corresponding to the relevant user.

Here, the feature information of the object may include the word corresponding to the object of the user, the word corresponding to the section in which the object is sensed, and the word corresponding to the distance from which the object is sensed.

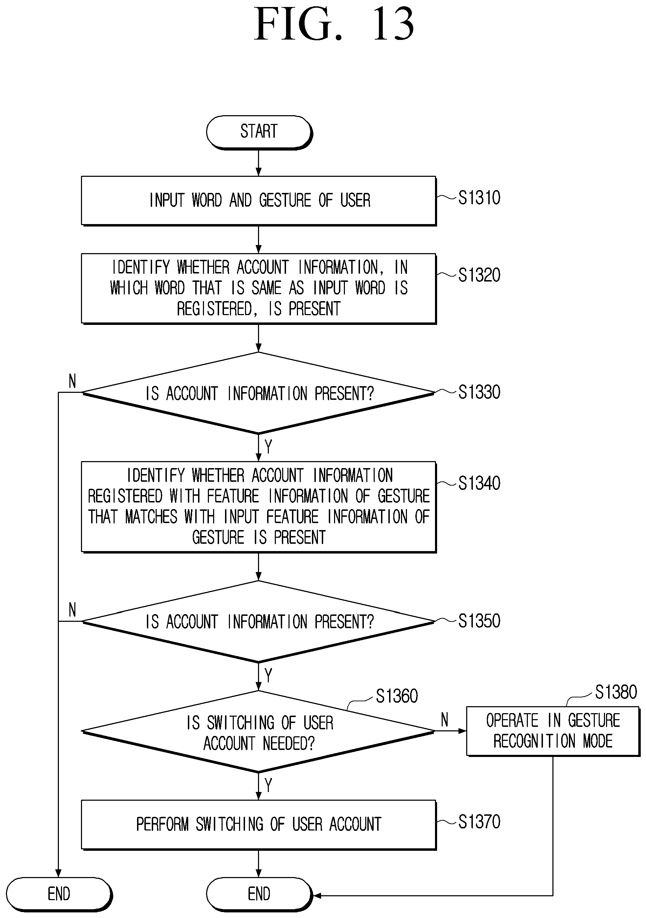

FIG. 13 is a flowchart illustrating a user account identifying method of an electronic apparatus according to one or more embodiments of the disclosure.

Referring to FIG. 13, the electronic apparatus may receive input of a word and a gesture from a user (S1310).

Then, the electronic apparatus may identify whether a user account information, in which a word that is same as the word input from the user is registered as the wake up word, is present (S1320).

Then, if the account information is identified as present (S1330:Y), whether a user account information, in which feature information of a gesture that is same as the feature information of the gesture input from the user is registered, is present may be identified (S1340).

Then, if the account information is identified as present (S1350:Y), whether switching of the user account is needed may be identified (S1360).

Then, if switching of the user account is identified as not needed (S1360:N), the electronic apparatus may operate in the gesture recognition mode (S1380). Conversely, if switching of the user account is identified as needed (S1360:Y), the electronic apparatus may perform the switching of the user account (S1370).

The various methods described in FIG. 11 to FIG. 13 may be performed by the electronic apparatus having the configurations shown in FIG. 2 or FIG. 10, but is not necessarily limited thereto, and may be performed by an electronic apparatus having various configurations.

In the above, various embodiments have been described individually or in combination, but each of the embodiments may not necessarily be implemented on its own. In other words, the above-described various embodiments may be combined as a whole or partially with at least one of the other embodiments and implemented together in one product.

Meanwhile, methods according to the various embodiments of the disclosure described above may be implemented in an application form installable in an electronic apparatus of the related art.

In addition, the methods according to the various embodiments of the disclosure described above may be implemented with only a software upgrade, or a hardware upgrade for the electronic apparatus of the related art.

In addition, the various embodiments of the disclosure described above may be performed through an embedded server provided in the electronic apparatus, or through at least one external server.

Meanwhile, according to an embodiment of the disclosure, the various embodiments described above may be implemented with software including instructions stored in a machine-readable storage media (e.g., computer). The machine may call stored instructions from the storage media, and as an apparatus operable according to the called instructions, may include the electronic apparatus according to the above-mentioned embodiments. Based on a command being executed by the processor, the processor may directly or using other elements under the control of the processor perform a function relevant to the command. The command may include a code generated by a compiler or executed by an interpreter. The machine-readable storage media may be provided in a form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment of the disclosure, a method according to the various embodiments described above may be provided included a computer program product. The computer program product may be exchanged between a seller and a purchaser as a commodity. The computer program product may be distributed in a form of a machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in a storage medium such as a server of a manufacturer, a server of an application store, or a memory of a relay server, or temporarily generated.

In addition, each of the elements (e.g., module or program) according to the various embodiments described above may be configured as a single entity or a plurality of entities, and a portion of sub-elements of the above-mentioned relevant sub-elements may be omitted, or other sub-elements may be further included in the various embodiments. Alternatively or additionally, a portion of the elements (e.g., modules or programs) may be integrated into one entity to perform the same or similar functions performed by each relevant element prior to integration. Operations performed by a module, a program, or another element, in accordance with various embodiments, may be executed sequentially, in a parallel, repetitively, or in a heuristic manner, or at least a portion of the operations may be executed in a different order, omitted or a different operation may be added.

While the disclosure has been illustrated and described with reference to example embodiments thereof, it will be understood that the embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus, comprising:
an interface;
memory; and
at least one processor,
wherein the at least one processor is configured to:
based on a gesture for account registration being identified based on sensing data obtained through the interface, provide at least one candidate word based on feature information of the gesture,
based on at least one among the at least one candidate word being selected, store account information that comprises the selected candidate word and feature information of the gesture in the memory, and
based on a user voice and a gesture being identified, perform a control operation based on account information corresponding to the user voice and a gesture among a plurality of account information stored in the memory.

2. The electronic apparatus of claim 1, wherein the at least one processor is configured to:
based on the user voice and a gesture being identified while another user account is logged-in, and account information corresponding to the user voice and the gesture being identified, switch to a user account of the user based on the identified account information.

3. The electronic apparatus of claim 1,
wherein the at least one processor is configured to:
based on the user voice and a gesture being identified, and account information corresponding to the user voice and the gesture being identified while there is no logged-in user account, operate in a gesture recognition mode performing a function according to a gesture of the user or a voice recognition mode performing a function according to the user voice.

4. The electronic apparatus of claim 2,
wherein the at least one processor is configured to:
based on a user account being switched based on the identified account information, change a preference of the electronic apparatus based on configuration information comprised in the identified account information.

5. The electronic apparatus of claim 1, further comprising:
a display,
wherein the at least one processor is configured to:
control the display to display by dividing a live view screen that is obtained through a sensor connected to the interface into a plurality of sections,
based on a gesture of the user being identified in one section among the plurality of sections, provide the at least one candidate word based a section in which the user gesture is identified and a distance between the user and the electronic apparatus, and
based on at least one among the provided at least one candidate word being selected, store the selected candidate word in the memory by including the selected candidate word in an account information corresponding to the user.

6. The electronic apparatus of claim 5,
wherein the at least one processor is configured to:
identify a section selected by the user among the plurality of sections comprised in the live view screen as a section in which the user gesture is positioned.

7. The electronic apparatus of claim 1,
wherein the at least one processor is configured to:
based on an image corresponding to a user being obtained, obtain a feature map of the user gesture by inputting the image corresponding to a user in a learned neural network model, and
identify and provide the at least one candidate word corresponding to the obtained feature map of a gesture.

8. The electronic apparatus of claim 1,
wherein the at least one processor is configured to:
based on an object for account registration being identified based on sensing data obtained through the interface, provide at least one candidate word based on feature information of the object, and
based on at least one among the at least one candidate word being selected, store account information comprised with the selected candidate word and feature information of the object in the memory.

9. The electronic apparatus of claim 8,
wherein the at least one processor is configured to:
based on a user voice and an object being identified, perform an operation based on account information corresponding to the user voice and an object among a plurality of account information stored in the memory.

10. The electronic apparatus of claim 9,
wherein the at least one processor is configured to:
based on the user voice and an object being identified, and account information corresponding to the user voice and the object being identified while another user account is logged-in, switch to a user account of the user based on the identified account information.

11. A control method of an electronic apparatus, the method comprising:
based on a gesture for account registration being identified, providing at least one candidate word based on feature information of the gesture;
based on at least one among the at least one candidate word being selected, storing account information that comprises the selected candidate word and feature information of the gesture; and
based on a user voice and a gesture being identified, performing an operation based on account information corresponding to the user voice and a gesture among a plurality of stored account information.

12. The method of claim 11,
wherein the performing an operation based on the identified account information comprises:
based on the user voice and a gesture being identified, and account information corresponding to the user voice and the gesture being identified while another user account is logged-in, switching to a user account of the user based on the identified account information.

13. The method of claim 11,
wherein the performing different operations according to whether switching of the user account is needed comprises:
based on the user voice and a gesture being identified, and account information corresponding to the user voice and the gesture being identified while there is no logged-in user account, operating in a gesture recognition mode performing a function according to the user gesture or a voice recognition mode performing a function according to the user voice.

14. The method of claim 11,
wherein the displaying by dividing a live view screen into a plurality of sections comprises:
based on the user gesture being identified in one section among the plurality of sections, providing the at least one candidate word based on a section in which the user gesture is identified and a distance between the user and the electronic apparatus; and
based on at least one among the provided at least one candidate word being selected, storing the selected candidate word by including the selected candidate word in an account information corresponding to the user.

15. A non-transitory computer-readable recording medium storing computer instructions for an electronic apparatus to perform an operation when executed by a processor of the electronic apparatus, the operation comprising:
based on a gesture for account registration being identified, providing at least one candidate word based on feature information of the gesture;
based on at least one among the at least one candidate word being selected, storing account information that comprises the selected candidate word and feature information of the gesture; and
based on a user voice and a gesture being identified, performing an operation based on account information corresponding to the user voice and a gesture among a plurality of stored account information.
